(19) **Europäisches Patentamt / European Patent Office / Office européen des brevets**

(11) **EP 4 683 323 A1**

(12) **EUROPEAN PATENT APPLICATION**
published in accordance with Art. 153(4) EPC

(43) Date of publication:
**21.01.2026 Bulletin 2026/04**

(21) Application number: **24773940.2**

(22) Date of filing: **11.03.2024**

(51) International Patent Classification (IPC):
**H04N 19/20** (2014.01)    **G06T 9/00** (2006.01)

(52) Cooperative Patent Classification (CPC):
**G06T 9/00; H04N 19/20; H04N 19/44**

(86) International application number:
**PCT/CN2024/080892**

(87) International publication number:
**WO 2024/193373 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.03.2023 CN 202310262481**

(71) Applicant: **Vivo Mobile Communication Co., Ltd.**
**Dongguan, Guangdong 523863 (CN)**

(72) Inventors:
• **ZOU, Wenjie**
  **Dongguan, Guangdong 523863 (CN)**
• **ZHANG, Wei**
  **Dongguan, Guangdong 523863 (CN)**
• **YANG, Fuzheng**
  **Dongguan, Guangdong 523863 (CN)**
• **LV, Zhuoyi**
  **Dongguan, Guangdong 523863 (CN)**

(74) Representative: **Walaski, Jan Filip et al**
**Venner Shipley LLP**
**200 Aldersgate**
**London EC1A 4HD (GB)**

(54) **ENCODING PROCESSING METHOD, DECODING PROCESSING METHOD, AND RELATED DEVICE**

(57)    This application discloses an encoding processing method, a decoding processing method, and a related device, which belong to the technical field of three-dimensional mesh coding. The encoding processing method according to an embodiment of this application includes: determining a base mesh bitstream based on a to-be-encoded mesh; and generating a target bitstream based on a to-be-encoded texture map corresponding to the to-be-encoded mesh and the base mesh bitstream, where the target bitstream includes target identification information, the target identification information is used for indicating an obtaining manner for target texture coordinates, and the obtaining manner includes obtaining from the base mesh bitstream or generating by a decoder side based on mesh parameterization.

Determine a base mesh bitstream based on a to-be-encoded mesh — 301

Generate a target bitstream based on a to-be-encoded texture map corresponding to the to-be-encoded mesh and the base mesh bitstream — 302

**FIG. 3**

## Description

## CROSS-REFERENCE TO RELATED APPLICATIONS

This application claims the priority of Chinese Patent Application No. 202310262481.2 filed in China on March, 17, 2023, which is incorporated herein by reference in its entirety.

## TECHNICAL FIELD

This application belongs to the technical field of three-dimensional mesh coding, and specifically, relates to an encoding processing method, a decoding processing method, and a related device.

## BACKGROUND

In a process of three-dimensional mesh coding, mesh encoding is usually performed according to a fixed encoding manner. For example, an encoder side device performs mesh simplification, mesh parameterization, subdivision processing, and deformation processing on a to-be-encoded mesh to obtain a base mesh, and then performs compressed encoding on the base mesh to obtain a base mesh bitstream. In this way, a bitstream obtained through encoding is relatively large. Therefore, a problem of poor flexibility of three-dimensional mesh coding is caused in the related art.

## SUMMARY

Embodiments of this application provide an encoding processing method, a decoding processing method, and a related device, which can solve a problem of poor flexibility of three-dimensional mesh coding.

According to a first aspect, an encoding processing method is provided. The method is applied to an encoder side, and includes:

determining a base mesh bitstream based on a to-be-encoded mesh; and
generating a target bitstream based on a to-be-encoded texture map corresponding to the to-be-encoded mesh and the base mesh bitstream, where the target bitstream includes target identification information, the target identification information is used for indicating an obtaining manner for target texture coordinates, and the obtaining manner includes obtaining from the base mesh bitstream or generating by a decoder side based on mesh parameterization.

According to a second aspect, a decoding processing method is provided. The method is applied to a decoder side, and includes:

receiving a target bitstream, where the target bitstream includes a base mesh bitstream and target identification information, the target identification information is used for indicating an obtaining manner for target texture coordinates, and the obtaining manner includes obtaining from the base mesh bitstream or generating by the decoder side based on mesh parameterization;
decoding the base mesh bitstream, to obtain a third mesh; and
generating a target decoded mesh based on the third mesh and the obtaining manner.

The target decoded mesh includes the target texture coordinates.
According to a third aspect, an encoding processing apparatus is provided. The apparatus is applied to an encoder side, and includes:

a processing module, configured to determine a base mesh bitstream based on a to-be-encoded mesh; and
a generation module, configured to generate a target bitstream based on a to-be-encoded texture map corresponding to the to-be-encoded mesh and the base mesh bitstream, where the target bitstream includes target identification information, the target identification information is used for indicating an obtaining manner for target texture coordinates, and the obtaining manner includes obtaining from the base mesh bitstream or generating by a decoder side based on mesh parameterization.

According to a fourth aspect, a decoding processing apparatus is provided. The apparatus is applied to a decoder side, and includes:

a receiving module, configured to receive a target bitstream, where the target bitstream includes a base mesh bitstream and target identification information, the target identification information is used for indicating an obtaining manner for target texture coordinates, and the obtaining manner includes obtaining from the base mesh bitstream or generating by the decoder side based on mesh parameterization; and

a decoding module, configured to decode the base mesh bitstream, to obtain a third mesh, and generate a target decoded mesh based on the third mesh and the obtaining manner.

The target decoded mesh includes the target texture coordinates.

According to a fifth aspect, an electronic device is provided. The electronic device includes a processor and a memory. The memory stores a program or an instruction executable on the processor. The program or the instruction, when executed by the processor, implements the steps of the method according to the first aspect. Alternatively, the program or the instruction, when executed by the processor, implements the steps of the method according to the second aspect.

According to a sixth aspect, an electronic device is provided, including a processor and a communication interface.

When the electronic device is an encoder side, the processor is configured to: determine a base mesh bitstream based on a to-be-encoded mesh; and generate a target bitstream based on a to-be-encoded texture map corresponding to the to-be-encoded mesh and the base mesh bitstream. The target bitstream includes target identification information. The target identification information is used for indicating an obtaining manner for target texture coordinates. The obtaining manner includes obtaining from the base mesh bitstream or generating by a decoder side based on mesh parameterization.

When the electronic device is a decoder side, the communication interface is configured to: receive a target bitstream, where the target bitstream includes a base mesh bitstream and target identification information, the target identification information is used for indicating an obtaining manner for target texture coordinates, and the obtaining manner includes obtaining from the base mesh bitstream or generating by the decoder side based on mesh parameterization. The processor is configured to: decode the base mesh bitstream, to obtain a third mesh; and generate a target decoded mesh based on the third mesh and the obtaining manner, where the target decoded mesh includes the target texture coordinates.

According to a seventh aspect, a video encoding and decoding system is provided, including an encoder side device and a decoder side device. The encoder side device may be configured to perform the steps of the mesh encoding method according to the first aspect. The decoder side device may be configured to perform the steps of the mesh decoding method according to the second aspect.

According to an eighth aspect, a readable storage medium is provided. The readable storage medium has a program or an instruction stored therein. The program or the instruction, when executed by a processor, implements the steps of the method according to the first aspect, or implements the steps of the method according to the second aspect.

According to a ninth aspect, a chip is provided. The chip includes a processor and a communication interface. The communication interface is coupled to the processor. The processor is configured to execute a program or an instruction, to implement the steps of the method according to the first aspect or implement the steps of the method according to the second aspect.

According to a tenth aspect, a computer program/program product is provided. The computer program/program product is stored in a storage medium. The computer program/program product is executed by at least one processor, to implement the steps of the method according to the first aspect, or implement the steps of the method according to the second aspect.

In the embodiments of this application, a target bitstream is provided with target identification information for indicating an obtaining manner for target texture coordinates. Therefore, three-dimensional mesh coding may be performed in different manners according to different requirements, thereby improving flexibility of three-dimensional mesh coding.

**BRIEF DESCRIPTION OF THE DRAWINGS**

FIG. 1 is a diagram of a conventional encoding framework;
FIG. 2 is a diagram of a conventional decoding framework;
FIG. 3 is a schematic flowchart of an encoding processing method according to an embodiment of this application;
FIG. 4 is an example diagram of an encoding framework in an encoding processing method according to an embodiment of this application;
FIG. 5 is an example diagram of a mesh simplification operation in an encoding processing method according to an embodiment of this application;

FIG. 6 is an example diagram of subdivision processing in an encoding processing method according to an embodiment of this application;

FIG. 7 is an example diagram of another encoding framework in an encoding processing method according to an embodiment of this application;

FIG. 8 is a schematic flowchart of a decoding processing method according to an embodiment of this application;

FIG. 9 is an example diagram of a decoding framework in a decoding processing method according to an embodiment of this application;

FIG. 10 is an example diagram of another decoding framework in a decoding processing method according to an embodiment of this application;

FIG. 11 is a structural diagram of an encoding processing apparatus according to an embodiment of this application;

FIG. 12 is a structural diagram of a decoding processing apparatus according to an embodiment of this application;

FIG. 13 is a structural diagram of a communication device according to an embodiment of this application; and

FIG. 14 is a structural diagram of an electronic device according to an embodiment of this application.

## DETAILED DESCRIPTION

The following clearly describes the technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

In the specification and the claims of this application, the terms "first" and "second" are used for distinguishing similar objects, but are not used for describing a specific sequence or order. It should be understood that the terms used in this way may be transposed where appropriate, so that the embodiments of this application can be implemented in a sequence other than those illustrated or described herein. In addition, objects defined by "first" and "second" are generally of the same class and do not limit the number of objects. For example, one or more first objects may be arranged. In addition, in the specification and claims, "or" represents at least one of connected objects. For example, "A or B" covers three solutions: solution 1 in which A is included but B is not included; solution 2 in which B is included but A is not included; and solution 3 in which both A and B are included. The character "/" in this specification generally indicates an "or" relationship between the associated objects.

The term "indication" in the specification and claims of this application may be an explicit indication or an implicit indication. The explicit indication may be understood as that a sending party explicitly notifies a receiving party of an operation to be performed or a request result in a sent indication. The implicit indication may be understood as that the receiving party determines according to an indication sent by the sending party, and determines, according to a determining result, an operation to be performed or a request result.

The term "indication" in the specification and claims of this application may be an explicit indication or an implicit indication. The explicit indication may be understood as that a sending party explicitly notifies a receiving party of an operation to be performed or a request result in a sent indication. The implicit indication may be understood as that the receiving party determines according to an indication sent by the sending party, and determines, according to a determining result, an operation to be performed or a request result.

Encoder and decoder sides corresponding to mesh encoding and decoding methods in embodiments of this application may be a terminal. The terminal may alternatively be referred to as a terminal device or user equipment (User Equipment, UE). The terminal may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a notebook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a smart bracelet, a smart earphone, smart glasses, and the like. It should be noted that a specific type of the terminal is not limited in the embodiments of this application.

For ease of understanding, some contents in the embodiments of this application are described below.

1. Visual volumetric video-based coding (Visual Volumetric Video-based Coding, V3C) standard.

The V3C standard provides a method for encoding and decoding various three-dimensional media by using a video or image coding technology. Specifically, before encoding, a three-dimensional media content is converted from a three-dimensional representation into a plurality of two-dimensional representations (referred to as V3C components) by means of projection, and then the two-dimensional representations are encoded by using an existing video or image coding technology. The V3C component mainly includes an occupancy component, a geometry component, and an attribute component. The occupancy component may represent particular regions associated with data of the three-dimensional representation in the two-dimensional representation. The geometry component represents information related to a position of three-dimensional data in space. The attribute component may provide attribute information corresponding to a vertex, such as a material and a texture. In addition, the components further include information about how to reconstruct a three-dimensional model by using these components, which is referred to as atlas (atlas) information.

The atlas information is used for associating all components, and additional information reconstructed from two dimensions to three dimensions is also included in atlas components. An atlas includes a plurality of base units. The base units are referred to as patches (patch). Each patch represents a region in an available two-dimensional component, and includes information needed for projecting the region back to a three-dimensional space.

2. Video-based dynamic mesh coding (Video-based dynamic mesh coding, VDMC).

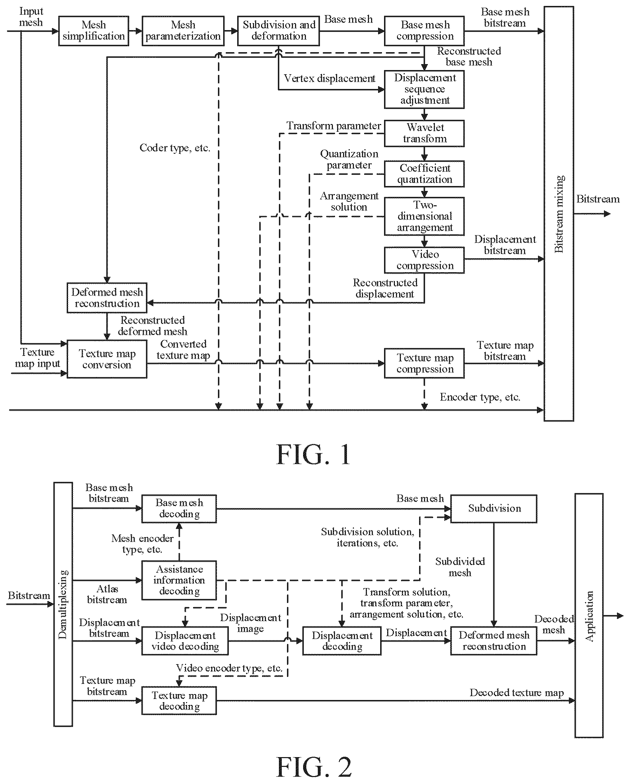

The VDMC is a standard developed by the Moving Picture Experts Group (Moving Picture Experts Group, MPEG) for compressing three-dimensional meshes. The main idea thereof is compressing the three-dimensional meshes by using the existing V3C standard. Because connectivity information of the three-dimensional meshes needs to be coded, a specific encoding procedure is slightly different from that of V3C. Syntactic semantics and a decoding operation of a decoder side of the V3C standard need to be extended to support decoding reconstruction of the three-dimensional meshes. VDMC-related encoding and decoding frameworks are shown in FIG. 1 and FIG. 2.

An overall framework of an encoder side is shown in FIG. 1. An input mesh is first simplified by using a simplification module. New texture coordinates are then generated for the mesh by performing mesh parameterization. Next, subdivision processing and deformation processing are performed on the parameterized mesh. To be specific, a new vertex is inserted into the mesh according to a specific subdivision processing method, and a distance between the vertex of the subdivided mesh and a nearest point of the input mesh is calculated, which is referred to as displacement information. Next, a vertex position of the parameterized mesh, namely the mesh before subdivision processing and deformation processing, is adjusted according to the displacement information. The adjusted mesh is referred to as a base mesh and is sent to a base mesh coding module. The base mesh is compressed by using an existing base mesh coding module and an existing mesh coder. In an inter-frame mode, a motion vector may further be generated for each vertex of the base mesh according to a reference frame, and the base mesh module only compresses the motion vector. The base mesh is reconstructed after being coded. Then, a displacement sequence is adjusted according to a vertex sequence of the reconstructed base mesh. Next, wavelet transform is first performed on the displacement information of the vertex in an adjusted sequence, and a transformed coefficient (or referred to as a wavelet coefficient) is quantized. Then, the quantized coefficient is arranged into a two-dimensional image according to a specific scanning sequence, and the two-dimensional image is coded by using a video encoder. Then, the reconstructed displacement information is applied to the subdivided base mesh to obtain a reconstructed subdivided deformed mesh. The mesh, the original input mesh, and a corresponding texture map are input into a corresponding texture map conversion module, to obtain a texture map corresponding to the reconstructed mesh. The texture map is also coded by using the video encoder. Parameters used in an encoding process, such as a used video encoder type, a mesh encoder type, a transform parameter, and a quantization parameter, are transferred to a decoder side by using assistance information.

An overall framework of the decoder side is shown in FIG. 2. For a received bitstream, the decoder side first demultiplexes all bitstreams, to respectively obtain a base mesh bitstream (base mesh bitstreams), a displacement bitstream (displacement bitstreams), a texture map bitstream (texture map bitstreams), and an atlas bitstream (atlas bitstreams). For the base mesh bitstream, a base mesh is obtained through decoding by using a mesh decoder indicated by the assistance information. The displacement bitstream and the texture map bitstream are decoded by using a video decoder. For a displacement part, after video decoding is performed, displacement further needs to be taken out from an image by using a displacement decoding module, is inversely quantized and inversely transformed, and then is applied to the subdivided base mesh, to obtain a deformed mesh reconstructed by the decoder side. After being decoded, the texture map is a texture map corresponding to the reconstructed deformed mesh. Subsequently, an application or rendering module uses the reconstructed deformed mesh and the texture map obtained through decoding as input for processing.

The following describes, in detail, the encoding processing method provided in this embodiment of this application through some embodiments and application scenarios thereof with reference to the accompanying drawings.

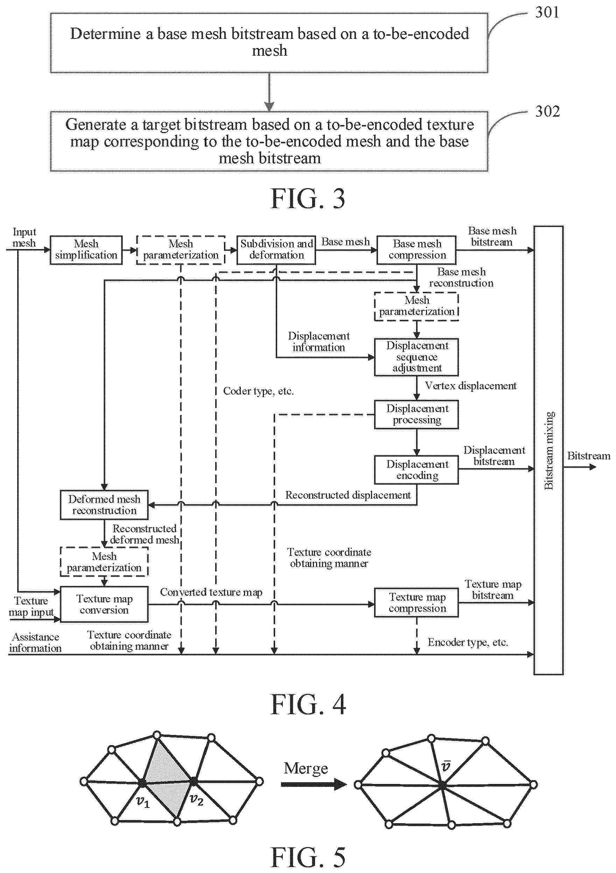

With reference to FIG. 3, an embodiment of this application provides an encoding processing method. As shown in FIG. 3, the encoding processing method includes:

Step 301: Determine a base mesh bitstream based on a to-be-encoded mesh.

Step 302: Generate a target bitstream based on a to-be-encoded texture map corresponding to the to-be-encoded mesh and the base mesh bitstream, where the target bitstream includes target identification information, the target identification information is used for indicating an obtaining manner for target texture coordinates, and the obtaining manner includes obtaining from the base mesh bitstream or generating by a decoder side based on mesh parameterization.

In this embodiment of this application, the target identification information may explicitly or implicitly indicate the obtaining manner for the target texture coordinates, because the target identification information is carried in the target bitstream.

Optionally, in some embodiments, the determining a base mesh bitstream based on a to-be-encoded mesh may specifically include:

performing mesh simplification on the to-be-encoded mesh, to obtain a first mesh;
performing subdivision processing and deformation processing on the first mesh, to obtain displacement information and a second mesh obtained after adjusting a vertex position of the first mesh; and
performing compressed encoding processing on the second mesh, to obtain a base mesh bitstream.

In this embodiment of this application, an encoder side may determine an encoding manner according to an actual situation. For example, when bitstream transmission needs to be reduced, texture coordinates may not be coded on the encoder side. To be specific, a mesh parameterization operation is not performed before the first mesh is subdivided and deformed. Otherwise, encoding may be performed in a manner of performing texture coordinate encoding on the encoder side.

Optionally, when the foregoing obtaining manner is obtaining from the base mesh bitstream, after a first mesh is obtained, mesh parameterization may be performed on the first mesh, and the mesh-parameterized first mesh is used as an input of subdivision processing. The second mesh may be understood as a base mesh including target texture coordinates. To be specific, before the performing subdivision processing and deformation processing on the first mesh, the method further includes:

performing mesh parameterization on the first mesh.

An input of the subdivision processing is a mesh-parameterized first mesh.

Optionally, when the obtaining manner is generating by a decoder side based on mesh parameterization, the second mesh may be understood as a base mesh not including the target texture coordinates.

In this embodiment of this application, a target bitstream is provided with target identification information for indicating an obtaining manner for target texture coordinates. Therefore, three-dimensional mesh coding may be performed in different manners according to different requirements, thereby improving flexibility of three-dimensional mesh coding.

It should be noted that, before the texture map is coded, texture map conversion needs to be performed based on texture coordinates. Therefore, when texture coordinate encoding is not performed on the encoder side, the texture coordinates need to be generated based on mesh parameterization before the texture map conversion is performed. In this embodiment of this application, the mesh parameterization may be performed at different positions, and corresponding encoding procedures are also different when the mesh parameterization is performed at different positions. This is described in detail below.

Optionally, in some embodiments, the generating a target bitstream based on a to-be-encoded texture map corresponding to the to-be-encoded mesh and the base mesh bitstream includes:

performing mesh reconstruction based on the base mesh bitstream, to obtain a first reconstructed mesh;
performing mesh parameterization on the first reconstructed mesh, to obtain a second reconstructed mesh; and
mixing the base mesh bitstream, a displacement bitstream, an atlas bitstream, and a texture map bitstream, to obtain the target bitstream.

The displacement bitstream is obtained based on displacement information and the second reconstructed mesh, and the displacement information is obtained based on the to-be-encoded mesh. The atlas bitstream is obtained based on assistance information, and the assistance information is used for assisting the decoder side in decoding. The texture map bitstream is obtained based on the first reconstructed mesh, a to-be-encoded texture map, and the displacement bitstream.

Optionally, in some embodiments, the method further includes:

adjusting a displacement sequence for the second reconstructed mesh according to the displacement information, to obtain a first vertex displacement;
performing displacement encoding on the first vertex displacement, to obtain a displacement bitstream;
performing deformed mesh reconstruction based on the first reconstructed mesh and a first reconstructed vertex displacement, to obtain a first reconstructed deformed mesh, where the first reconstructed vertex displacement is obtained based on performing displacement reconstruction on the displacement bitstream; and
determining the texture map bitstream based on the first reconstructed mesh, a to-be-encoded texture map, and the first reconstructed deformed mesh.

In this embodiment of this application, the encoder side does not perform texture coordinate encoding, and performs mesh parameterization before performing displacement encoding. To be specific, the encoder side performs mesh parameterization before performing deformed mesh reconstruction, thereby reducing complexity of the mesh parameterization. Correspondingly, the decoder side needs to perform mesh parameterization before performing subdivision processing, to generate the target texture coordinates.

In this embodiment of this application, an encoding framework of the encoder side is specifically shown in FIG. 4, and includes the following procedures:

1. Mesh Simplification: The mesh simplification is to simplify a currently input to-be-encoded mesh to a base mesh having a relatively small number of points and surfaces, and keep a shape of an original mesh as much as possible. The focus of the mesh simplification is on a simplified operation and a corresponding error metric. A feasible mesh simplification operation is shown in FIG. 5. Vertexes at two ends of an edge are merged into one vertex and a connection between the two vertexes is deleted. This process is repeated in an entire mesh according to a rule, to reduce the number of faces and the number of vertexes of the mesh to target values.

In the simplification process, an error metric may be selected to optimize a simplification result. For example, a sum of equation coefficients of all adjacent faces of a vertex may be selected as an error metric of the vertex, and an error metric of a corresponding edge is a sum of error metrics of two vertexes on the edge. In other words, an error generated when one edge is merged is a sum of distances between a merged vertex and all planes adjacent to two original vertexes of the edge.

After the simplification operation and the corresponding error metric are determined, mesh simplification starts to be iteratively performed. First, a vertex error of an initial mesh is calculated, to obtain an error of each edge. Then the edges are arranged according to an ascending order of errors, and an edge with a minimum error is selected for merging each time. Meanwhile, a position of a merged vertex is calculated, and errors of all edges related to the merged vertex are updated. To be specific, an edge arrangement sequence is updated, to ensure that each iteration is based on a global error metric. Through iteration, the faces of the mesh are simplified to satisfy a number required for lossy encoding.

The mesh parameterization is mainly to regenerate texture coordinates for a simplified mesh, to obtain a first mesh. A specific algorithm for parameterizing a mesh may be set according to an actual requirement, for example, an Isocharts algorithm. The algorithm implements stretch-driven parameterization of a three-dimensional mesh by using spectral analysis, and the three-dimensional mesh is UV-expanded, fragmented, and packed into a two-dimensional texture domain.

2. Mesh Parameterization: The mesh parameterization may be performed at different positions according to different encoding frameworks. For example, in consideration of encoding of texture coordinates, the encoder side may use an encoding framework 1, such as an encoding framework in FIG. 4 in which mesh parameterization is performed after the mesh simplification. If the encoder side decides not to encode texture coordinates, the same mesh parameterization process can be applied at both the encoder and decoder to regenerate the texture coordinates. To be specific, an encoding framework 2, such as an encoding framework in FIG. 4 in which the mesh parameterization is performed after a base mesh is reconstructed (to be specific, a first reconstructed mesh is obtained by performing mesh reconstruction based on the base mesh bitstream), may be used.

The mesh parameterization is mainly to regenerate texture coordinates for a simplified mesh, to obtain a first mesh. A specific algorithm for parameterizing a mesh may be set according to an actual requirement, for example, an Isocharts algorithm. The algorithm implements stretch-driven parameterization of a three-dimensional mesh by using spectral analysis, and the three-dimensional mesh is UV-expanded, fragmented, and packed into a two-dimensional texture domain. A stretching threshold is set, and an algorithm thereof is briefly described as follows:

a) Calculate a surface spectral analysis to provide an initial parameterization.
b) Perform an iteration of stretching optimization.
c) Stop the operation if stretching of the derived parameterization is less than a threshold.
d) Perform surface spectral clustering to divide the surface into charts.
e) Optimize a chart boundary by using a graph cut algorithm.
f) Iteratively segment the charts until a stretching criterion is satisfied.

Optionally, the surface spectral analysis is parameterized based on an isometric feature mapping (isometric feature mapping, IsoMap) dimensionality reduction method. A group of high-dimensional points are given, and the IsoMap calculates a geodesic distance (geodesic distance) along the manifold as a jumping sequence between adjacent points. Then, a multidimensional scaling (multidimensional scaling, MDS) algorithm is applied to these geodesic distances, to find a group of points that are embedded in a low-dimensional space and have similar pairwise distances. A surface having N points is given, and a calculation process thereof is as follows:

a) Calculate a symmetric matrix $\boldsymbol{D}_N$ of squares of the geodesic distance between the surface points.

b) Perform double centralization and normalization on $\boldsymbol{D}_N$ to obtain $\boldsymbol{B}_N$, where a calculation process thereof is shown in Formula 1:

$$\boldsymbol{B}_N = \frac{1}{2}\boldsymbol{J}_N\boldsymbol{D}_N\boldsymbol{J}_N \qquad (1),$$

where $\mathbf{J}_N = \mathbf{I} - \frac{1}{N}\mathbf{1}\mathbf{1}^{\mathbf{T}}$, I is an N-dimensional unit matrix, and 1 is a unit vector having a length of N.

c) Calculate an eigenvalue $\lambda_i$ of $\mathbf{B}_N$ and a corresponding eigenvector $\vec{v}_i$, where i=1, 2, ..., N.

d) Embed each point i on the original surface into a new space as an N-dimensional vector $\vec{y}_i$, where a calculation process of a j$^{th}$ element of this point is shown in Formula 2:

$$\vec{y}_i^{\ j} = \sqrt{\lambda_j}\vec{v}_j^{\ i}, j = 1, 2, \cdots, N \qquad (2),$$

The eigenvalue $\lambda_i$ of $\mathbf{B}_N$ and the corresponding eigenvector $\vec{v}_i$ form spectral decomposition of a surface shape. An eigenvector corresponding to a large eigenvalue represents a global low-frequency feature on the surface, and an eigenvector corresponding to a small eigenvalue represents a high-frequency detail. High-energy and low-frequency components are used as basis for chartification and parameterization.

Although N eigenvalues are needed to completely represent a surface having N vertexes, a minority of energy usually occupies a majority of energy. Therefore, only n (n<<N) maximum eigenvalues and corresponding eigenvectors are calculated, to generate n-dimensional embedding of all points.

Because mapping from a high-dimensional space to a low-dimensional space is not equidistant, the parameterization may cause distortion. The distortion of the n-dimensional embedding may be calculated as a sum of distortion of geodesic distances on all vertexes. A geodesic distance distortion (Geodesic distance distortion, GDD) of each vertex i under embedding is defined as Formula 3:

$$\mathrm{GDD}(i) = \sqrt{\frac{1}{N-1}\sum_{j=1}^{N}\left(\left\|\vec{y}_i - \vec{y}_j\right\| - d_{geo}(i,j)\right)^2} \qquad (3),$$

where $\vec{y}_i$ is an n-dimensional embedding coordinate of the vertex i, and $d_{geo}(i,j)$ is a geodesic distance between a point i and a point j.

When n=2, the surface spectral analysis generates a surface parameterization in which a sum of squares of GDD of all vertexes is minimum.

It should be noted that although the Isomap algorithm calculates the geodesic distance along the manifold, in the presence of some non-manifolds in the input three-dimensional mesh, corresponding preprocessing is performed in this solution to eliminate the non-manifolds.

Optionally, because stretching optimization from the three-dimensional space to the two-dimensional space is not equidistant, the parameterization may cause distortion. The distortion may be measured by using many methods, including a storage condition of an angle or a region, or a parameter distance by which a surface is stretched or contracted. This algorithm focuses on distance distortion, and especially on the definition of geometrical stretching. Average stretching $L^2$ of a surface local distance and two measures of stretching $L^\infty$ in a worst case are defined. It is assumed that a triangle T has two-dimensional texture coordinates $p_1$, $p_2$, $p_3$, where $p_i = (s_i, t_i)$, and corresponding three-dimensional coordinates are represented as $q_1$, $q_2$, $q_3$. A calculation process of affine mapping S(p)=S(s, t)=q is shown in Formula 4:

$$S(p) = \frac{\langle p, p_2, p_3 \rangle q_1 + \langle p, p_3, p_1 \rangle q_2 + \langle p, p_1, p_2 \rangle q_3}{\langle p_1, p_2, p_3 \rangle} \qquad (4),$$

where $\langle p_1, p_2, p_3 \rangle$ represents an area of the triangle $p_1$, $p_2$, $p_3$. Because the mapping is affine, a partial derivative of the mapping is a constant in (s, t). A calculation process thereof is shown in Formula 5 and Formula 6:

EP 4 683 323 A1

$$Ss = \frac{\partial S}{\partial s} = \frac{q_1(t_2 - t_3) + q_2(t_3 - t_1) + q_3(t_1 - t_2)}{2A} \quad (5),$$

$$St = \frac{\partial S}{\partial t} = \frac{q_1(s_3 - s_2) + q_2(s_1 - s_3) + q_3(s_2 - s_1)}{2A} \quad (6),$$

where $A = \langle p_1, p_2, p_3 \rangle = \frac{(s_2 - s_1)(t_3 - t_1) - (s_3 - s_1)(t_2 - t_1)}{2}$.

Then, large and small singular values of a Jacobian matrix $[S_s, S_t]$ are calculated. A calculation process is shown in Formula 7 and Formula 8:

$$\gamma_{max} = \sqrt{\frac{1}{2\left((a+c) + \sqrt{(a-c)^2 + 4b^2}\right)}} \quad (7),$$

$$\gamma_{min} = \sqrt{\frac{1}{2\left((a+c) - \sqrt{(a-c)^2 + 4b^2}\right)}} \quad (8),$$

where $a = S_S \cdot S_S$, $b = S_S \cdot S_t$, and $c = S_t \cdot S_t$. The singular value $\gamma_{max}$ and $\gamma_{min}$ represent a maximum length and a minimum length obtained when a unit length vector is mapped from a two-dimensional texture domain to a three-dimensional surface, namely maximum and minimum local "stretching". Definitions of two stretching measures on the triangle T are shown in Formula 9 and Formula 10:

$$L^2(T) = \sqrt{\frac{(\gamma_{max}^2 + \gamma_{min}^2)}{2}} = \sqrt{\frac{(a+c)}{2}} \quad (9),$$

$$L^\infty(T) = \gamma_{max} \quad (10),$$

Definitions of stretching measures on an entire three-dimensional mesh $M = \{T_i\}$ are shown in Formula 11 and Formula 12:

$$L^2(M) = \sqrt{\frac{\sum_{T_i \in M} \left(L^2(T_i)\right)^2 A'(T_i)}{\sum_{T_i \in M} A'(T_i)}} \quad (11),$$

$$L^\infty(M) = \max_{T_i \in M} L^\infty(T_i) \quad (12),$$

where $A'(T_i)$ is a surface area of the triangle $T_i$ in the three-dimensional space.

Because $L^\infty$ depends on only one worst case point in a domain, $L^\infty$ stretching is difficult to be controlled by any method, but iterations for $L^2$ stretching minimization may significantly improve the result.

Optionally, for surface spectral clustering, if the parameterization generated by means of spectral analysis fails to satisfy a stretching threshold, the surface spectral clustering is divided into smaller charts. Because global features of a model correspond to large eigenvalues, the global features are used for division. Several representative vertexes are calculated by using a spectral analysis result. Then charts are grown (grow charts) simultaneously around the representative points. This method is referred to as the surface spectral clustering. A specific algorithm process is as follows:

a) Arrange eigenvalues and corresponding eigenvectors from spectral analysis in a descending order, namely $\lambda 1 \geq \lambda 2 \geq .. \geq \lambda N$.

b) Obtain top n eigenvalues and eigenvectors ($n \leq 10$) for maximizing $\lambda n / \lambda n+1$.

c) Calculate n-dimensional embedding coordinates $\vec{y}_i^{\,j} = \sqrt{\lambda_j}\, \vec{v}_i^{\,j}\, (j=1,2,...,n)$ of each vertex i in a three-dimensional mesh.

d) Find, for each of the n embedding coordinates, two points having maximum and minimum coordinates, and set the points as 2n representative points.

e) Remove representative points that are excessively close, to generate $m \leq 2n$ representative points (by using a distance threshold of 10 times an average edge length of an input mesh).

f) Divide the three-dimensional mesh into m parts by using a geodesic distance calculated in the surface spectral analysis and by simultaneously growing charts (grow charts) around the representative point. Each triangle is allocated to a chart having a representative point closest to the triangle (a geodesic distance from the triangle to the representative point is calculated as an average value of geodesic distances from three vertexes of the triangle to a representative vertex).

Optionally, for boundary optimization, after the charts are segmented, a boundary between the charts is optimized by using a graph cut algorithm. The boundaries of the Charts should satisfy two targets: (1) the boundaries should pass through a high curvature region without being too uneven; and (2) embedding distortion of the boundary charts should be minimized. This algorithm expresses an optimal boundary problem as a graph cutting problem. For simplicity, a binary case in which a surface is divided into two is discussed below. When subdivision processing is performed to obtain more than two charts, each pair of adjacent charts is considered sequentially.

It is assumed that an optimal boundary is searched for between a chart A and a chart B, and an initial division is generated by using surface spectral clustering. Then, an intermediate region C is generated by extending a region to two sides of the initial segmentation boundary. The size of the intermediate region is directly proportional to a total area of unstripped patches (patch). Currently, an undirected flow network graph is constructed from C by means of method extension in the graph cut algorithm. Herein, a definition of "capacity" between two adjacent triangles $f_i$ and $f_j$ in the graph cut algorithm is modified as shown in Formula 13:

$$c\left(f_i, f_j\right) = \alpha c_{\text{ang}}\left(f_i, f_j\right) + \left(1-\alpha\right) c_{\text{distort}}\left(f_i, f_j\right) \tag{13}$$

The first term in Formula 13 corresponds to a first target of performing non-uneven cutting along an edge having a high dihedral angle. A calculation process is shown in Formula 14:

$$c_{\text{ang}}\left(f_i, f_j\right) = \left(1 + \frac{d_{\text{ang}}\left(f_i, f_j\right)}{\text{avg}(d_{\text{ang}})}\right)^{-1} \tag{14}$$

where $d_{\text{ang}}(f_i, f_j) = 1 - \cos\alpha_{ij}$, $\alpha_{ij}$ is an angle between normal lines of the triangles $f_i$ and $f_j$, and $\text{avg}(d_{\text{ang}})$ is an average angular distance between adjacent triangles.

The second term in Formula 13 measures embedding distortion. A calculation process is shown in Formula 15 and Formula 16:

$$c_{\text{distort}}\left(f_i, f_j\right) = \frac{d_{\text{distort}}\left(f_i, f_j\right)}{\text{avg}(d_{\text{distort}})} \tag{15}$$

$$d_{\text{distort}}\left(f_i, f_j\right) = \left|\text{GDD}_A\left(f_i\right) - \text{GDD}_B\left(f_i\right)\right| + \left|\text{GDD}_A\left(f_j\right) - \text{GDD}_B\left(f_j\right)\right| \tag{16}$$

where $\text{GDD}_A(f_j)$ and $\text{GDD}_B(f_j)$ are respectively GDDs of the triangle $f_i$ embedded under the induction of chart A or chart B, and $\text{avg}(d_{\text{distort}})$ is an average of $d_{\text{distort}}(f_i,f_j)$ on all adjacent triangle pairs. The definition of $c_{\text{distort}}(f_i,f_j)$ is more inclined to balance boundary edges of a GDD between embedding determined by chart A and chart B. In other words, the cutting should avoid placing the triangle on a wrong side, so as to generate unnecessary deformation.

A weight parameter $\alpha$ in Formula 13 is a balance between the foregoing two targets.

Simple implementation of the stretching-driven chartification and parameterization algorithm costs a lot, especially as the number of model vertexes increases. Therefore, to increase a calculation speed, the Iso-charts algorithm uses an extension algorithm landmark Isomap of Isomap in an actual application. Meanwhile, the landmark Isomap algorithm is also used for calculating embedding coordinates of a vertex in an intermediate region during boundary optimization, to further reduce embedding distortion.

Finally, the charts generated in the foregoing process are packed onto a two-dimensional texture domain by using a chart packing algorithm used in an MCGIM algorithm. Finally, a three-dimensional mesh in which texture coordinates are regenerated may be obtained.

3. Subdivision Processing and Deformation Processing: The subdivision processing is applied to an input 3D mesh to generate displacement vector information. An input 2D curve (indicated by a 2D folded line) is referred to as an "original" curve. First, downsampling is performed to generate a base curve/folded line, referred to as a "simplified" curve. Then, a subdivision processing solution is applied to a simplified polyline, to generate a "subdivided" curve. Next, the subdivided polyline is deformed, to obtain a better original curve approximation. To be specific, a geometrical displacement vector is calculated for each vertex of the subdivided mesh, so that the shape of the subdivided curve is as close to the shape of the original curve as possible. These geometrical displacement vector vectors are geometrical displacement vector information output by the module. The same deformation process is also applied to attribute information corresponding to a vertex, to obtain a corresponding attribute displacement vector.

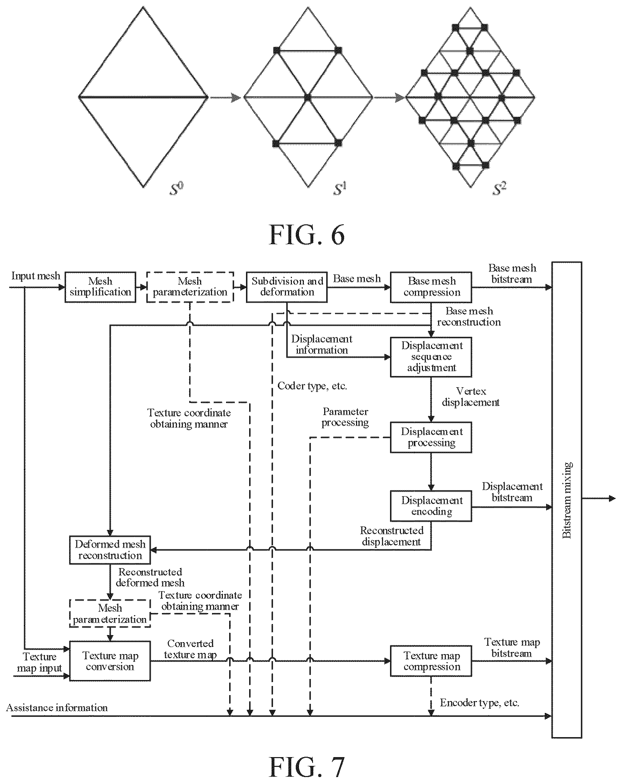

The subdivision processing uses a parameterized mesh as an input. In this step, the input mesh is first subdivided. A subdivision processing solution may be randomly selected. A possible solution is a midpoint subdivision processing solution, which subdivides each triangle into four sub-triangles in each subdivision processing iteration, as shown in FIG. 6. When a new vertex is introduced in the middle of each edge, subdivision processing of geometrical information and attribute information is independently performed because connection relationships between the geometrical information and the attribute information are usually different.

Optionally, a manner of calculating a position $Pos(v_{12})$ of a midpoint $v_{12}$ of a newly introduced edge $(v_1,v_2)$ is shown in Formula 17:

$$Pos(v_{12}) = \frac{1}{2}\left(Pos(v_1) + Pos(v_2)\right) \tag{17},$$

where $Pos(v_1)$ is geometrical coordinates of a vertex $v_1$, and $Pos(v_2)$ is geometrical coordinates of a vertex $v_2$.

For the subdivided mesh, a nearest neighboring point (including a point on an original mesh surface) of each point on the original input mesh is found, and the searching may accelerated by using a data structure such as kdTree. A displacement vector of geometrical coordinates of each vertex on the subdivided mesh is obtained by calculating a distance between each vertex on the subdivided mesh and the geometrical coordinates of the nearest neighboring point on the original input mesh. The module transfers the generated displacement vector to a subsequent module for encoding.

The generated displacement vector is in a global coordinate system which is the same as that of the input mesh. A possible optimization method is to convert the displacement vector into a local coordinate system. The local coordinate system of each vertex is defined by a normal vector of the vertex on the subdivided mesh. The advantage of this manner is that a normal component of the geometrical displacement vector has more significant impact on the quality of the reconstructed mesh than two tangential components. Therefore, larger quantization parameters may be set for the tangential components.

4. Compressed Encoding for Base Mesh: The base mesh may be understood as the foregoing second mesh. The compressed encoding mainly has two different modes, which are respectively an intra-frame mode and an inter-frame mode. In the intra-frame mode, a base mesh compression module codes and reconstructs an input three-dimensional mesh by using an existing static mesh encoder. In the inter-frame mode, the base mesh compression module calculates a motion vector between an input mesh vertex and a reference frame mesh vertex, codes the motion vector, and reconstructs a current frame base mesh according to a reconstructed motion vector and a reference frame mesh. The base mesh compression module outputs a compressed bitstream, and transfers the reconstructed base mesh as an output to a displacement sequence adjustment module. The displacement sequence adjustment module performs vertex displacement adjustment on the reconstructed base mesh based on displacement information, to obtain a first vertex displacement.

5. Wavelet Transform: Transform may be applied to the displacement vector to reduce a correlation between data. An optional transform is linear wavelet transform. A prediction process thereof is defined as shown in Formula 18:

$$Signal(v) \leftarrow Signal(v) - \frac{1}{2}\left(Signal(v_1) + Signal(v_2)\right) \tag{18},$$

where $v$ is a newly inserted midpoint on an edge $(v_1,v_2)$, $Signal(v)$ is a displacement vector corresponding to a vertex $v$,

*Signal*($v_1$) is a displacement vector corresponding to a vertex $v_1$, and *Signal*($v_2$) is a displacement vector corresponding to a vertex $v_2$. The displacement vector of the vertex $v$ is predicted and then updated. An update process is defined as shown in Formula 19:

$$Signal(v) \leftarrow Signal(v) + \frac{1}{8} \sum_{w \in v^*} Signal(w) \qquad (19),$$

where $v^*$ is a set of all vertexes adjacent to the vertex $v$. The transformed displacement vector is referred to as a wavelet coefficient.

6. Coefficient Quantization: The transformed displacement vector, namely a wavelet coefficient, may be quantized in many quantization manners. A method is shown in Formula 20 and Formula 21:

$$disp[v].d[k] = floor(disp[v].d[k] * scale[k]) \qquad (20),$$

$$scale[k] = 2 \wedge \left( 16 - bitDepthPosition + \frac{(4 - qp[k])}{6} \right) \qquad (21),$$

where $disp[v]$ represents a transformed value of a $v^{th}$ vertex displacement vector, $d[k]$ represents a $k^{th}$ value of the displacement vector, and *floor* represents rounding down. *bitDepthPosition* represents a bit depth of a current geometrical position of a mesh vertex, and $qp[k]$ represents a quantization parameter of a $k^{th}$ coefficient. As described above, after the displacement vector is converted into a coordinate system, the normal component of the displacement vector has more significant impact on quality than the tangential component. Therefore, a larger quantization parameter may be used for the tangential component.

Meanwhile, according to the characteristic of wavelet transform, different quantization parameters may be used for a vertex newly generated through subdivision processing and an original vertex. To be specific, for the subdivided vertex, the quantization parameter is updated as shown in Formula 7:

$$disp[v].d[k] = floor(disp[v].d[k] * scale[k]) \qquad (22),$$

where $lodScale[k]$ represents a coefficient of the quantization parameter of the current subdivision level.

7. Displacement Encoding: Video encoding or quotient encoding may be included. Optionally, video encoding is used as an example. For the part of displacement encoding, quantized wavelet coefficients are used as input to perform video encoding, and the quantized wavelet coefficients need to be arranged into a two-dimensional image. An arrangement manner is to traverse the wavelet coefficients in a sequence from low frequency to high frequency.

Optionally, an index of a pixel block *NxM* (for example, N=M=16) where each coefficient is located is determined. Each coefficient should be stored in the pixel block according to a raster scanning sequence of the pixel blocks.

Optionally, a position of the corresponding pixel block *NxM* on an image may be calculated according to a Morton (Morton) sequence.

It should be understood that an arrangement manner is not limited in this embodiment of this application, and another arrangement manner such as a zigzag sequence and a raster sequence may alternatively be used. The encoder may specify the corresponding arrangement manner in a bitstream explicitly.

It should be noted that, in this embodiment of this application, displacement processing may be performed, or displacement encoding may be directly performed instead of displacement processing. After the displacement processing is performed, compression efficiency of subsequent displacement encoding can be improved, thereby reducing the size of a target bitstream.

8. Deformed Mesh Reconstruction: A displacement encoding module obtains a reconstructed displacement. To be specific, a displacement vector consistent with the decoder side is obtained in a manner of inverse quantization and inverse transformation. After the reconstructed geometrical displacement vector is obtained, the reconstructed base mesh is subdivided, and a reconstructed subdivided deformed mesh is obtained according to the corresponding displacement vector and transferred to a texture map conversion module.

9. Texture Map Conversion: The texture map conversion module performs texture map conversion according to an input original mesh (i.e., a to-be-encoded mesh), an input original texture map (i.e., a to-be-encoded texture map), and the reconstructed deformed mesh. Specifically, the texture map conversion may include the following steps:

calculating texture coordinates of each pixel on a to-be-generated target texture map, such as texture coordinates P(u, v) corresponding to a pixel A(i, j);

determining whether the texture coordinates are in a triangular facet after subdivided deformed mesh parameterization;

if the texture coordinates do not belong to any triangular facet, marking the pixel as an empty pixel, and then filling by using a filling algorithm; and

if the texture coordinates belong to one triangular facet, performing a target operation.

The target operation may include:

marking the pixel as filled;

calculating barycentric coordinates of the texture coordinates in the current triangular facet according to the texture coordinates;

mapping two-dimensional texture coordinates to three-dimensional geometrical coordinates according to the barycentric coordinates and the corresponding triangular facet, namely, mapping to a point on the subdivided deformed mesh corresponding to the texture coordinates, as shown by M(x, y, z) in the map;

searching the input original mesh for a point closest to the three-dimensional coordinates, as shown by *M'(x, y, z)* in the map;

calculating barycentric coordinates of the three-dimensional coordinates according to a triangular facet thereof, mapping the three-dimensional coordinates to two dimensions, and calculating texture coordinates thereof, namely P'(u', v');

performing sampling on the input original texture map by using the texture coordinates, to obtain a value A'(i',j') of a corresponding pixel position; and

assigning the value to the corresponding pixel A(i, j) on the to-be-generated target texture map.

10. Texture Map Compression: After a converted texture map is obtained, empty pixels in the converted texture map may be filled by using a related filling algorithm (such as a Push-Pull algorithm). Then, encoding may be performed by using an existing video encoder such as H.264/AVC, H.265/HEVC, or H.266/VVC, to obtain an output texture map bitstream. In addition, operations such as color space conversion and chroma sub-sampling may further be selectively applied to video encoding to obtain a better rate-distortion performance, for example, color space conversion from RGB 444 to YUV420.

Optionally, in some embodiments, the generating a target bitstream based on a to-be-encoded texture map corresponding to the to-be-encoded mesh and the base mesh bitstream includes:

performing mesh reconstruction based on the base mesh bitstream, to obtain a first reconstructed mesh;

performing deformed mesh reconstruction based on the first reconstructed mesh and a second reconstructed vertex displacement, to obtain a second reconstructed deformed mesh, where the second reconstructed vertex displacement is obtained based on performing displacement reconstruction on the displacement bitstream;

performing mesh parameterization on the second reconstructed deformed mesh, to obtain a third reconstructed deformed mesh; and

mixing the base mesh bitstream, the displacement bitstream, an atlas bitstream, and a texture map bitstream, to obtain the target bitstream.

The displacement bitstream is obtained based on displacement information and the first reconstructed mesh, and the displacement information is obtained based on the to-be-encoded mesh. The atlas bitstream is obtained based on assistance information, and the assistance information is used for assisting the decoder side in decoding. The texture map bitstream is obtained based on the first reconstructed mesh, a to-be-encoded texture map, and the third reconstructed deformed mesh.

Optionally, in some embodiments, the method further includes:

adjusting a displacement sequence for the first reconstructed mesh according to the displacement information, to obtain a second vertex displacement; and

performing displacement encoding on the second vertex displacement, to obtain a displacement bitstream.

In this embodiment of this application, an encoding framework of the encoder side is specifically shown in FIG. 7. FIG. 7 may be understood as two encoding frameworks according to different positions of mesh parameterization. For example, in consideration of encoding of texture coordinates, the encoder side may use an encoding framework 1, such as an encoding framework in FIG. 7 in which mesh parameterization is performed after the mesh simplification. If the encoder side considers non-coding of texture coordinates, the encoder/decoder side regenerates texture coordinates of a mesh by using the same mesh parameterization step. To be specific, an encoding framework 3, such as an encoding framework in FIG. 7 in which the mesh parameterization is performed after deformed mesh reconstruction (to be specific, a second reconstructed deformed mesh is obtained by performing deformed mesh reconstruction based on the first reconstructed mesh and a second reconstructed vertex displacement), may be used. An implementation procedure of the encoding framework 3 in this embodiment of this application is similar to the implementation procedure of the encoding framework 2 except that mesh parameterization positions are different. For a specific implementation procedure, refer to the foregoing embodiment, and details are not described herein again.

It should be noted that, the position of the target identification information in the target bitstream may be set according to an actual requirement. For example, in some embodiments, the target identification information is located in an atlas bitstream in the target bitstream, and the atlas bitstream is obtained based on assistance information. To be specific, the target bitstream includes assistance information, and the assistance information includes target identification information.

Optionally, in some embodiments, the target identification information includes at least one of the following:

first field information, where the first field information is used for indicating the number of the target texture coordinates;
second field information, where the second field information is used for indicating whether the target texture coordinates are generated by the decoder side based on mesh parameterization; and
third field information, where the third field information is used for indicating index information of a method for generating the target texture coordinates.

Optionally, in some embodiments, the target identification information is information for indicating functions and algorithms to be supported by the decoder side. In this embodiment of this application, the target identification information may be understood as a profile identifier (ID). To be specific, the obtaining manner for texture coordinates may be implicitly indicated by using different profile IDs.

In this embodiment of this application, a V3C parameter set may be extended based on a V3C syntax structure, for specifying a general parameter in a sequence. A parameter indicating the obtaining manner for texture coordinates is defined in the parameter set. Details may be shown in Table 1 below.

Table 1:

| . asps_vmc_extension( ) { | Descriptor |
|---|---|
| ... | |
| **asps_vmc_ext_num_attribute_video** | u(7) |
| for(i=0; i< asps_vmc_ext_num_attribute_video; i++) { | |
| ... | |
| **asps_vmc_ext_derive_textcoord_flag**[ i ] | u(1) |
| if(asps_vmc_ext_derive_textcoord_flag) { | |
| **asp_vmc_ext_derive_textcoord_method**[ i ] | u(3) |
| if(asps_vmc_ext_derive_textcoord_method[ i ]== method index) { | |
| //a parameter list used in a parameterization method corresponding to method in-dex | |
| } | |
| ... | |
| } | |
| } | |
| ... | |

(continued)

| | |
|---|---|
| } | |
| **asps_vmc_ext_num_attribute_video** represents the number of attribute maps corresponding to a mesh referring to the parameter set, namely the number of texture coordinates corresponding to the mesh.<br>**asps_vmc_ext_derive_textcoord_flag**[ i ] represents whether texture coordinates of an $i^{th}$ attribute map corresponding to a mesh referring to the parameter set are generated from a decoder side, 0 represents that the texture coordinates corresponding to the attribute are transmitted through a bitstream, and 1 represents that the texture coordinates corresponding to the attribute are regenerated at the decoder side.<br>**asps_vmc_ext_derive_textcoord_method**[ i ] represents a method index used when texture coordinates of an $i^{th}$ attribute map corresponding to a mesh referring to the parameter set are regenerated, a method list supported by the decoder side is used for obtaining a corresponding method according to the corresponding index, and then a corresponding parameter is obtained according to the corresponding method index. | |

In this embodiment of this application, **asps_vmc_ext_num_attribute_video** may be understood as the foregoing first field information, **asps_vmc_ext_derive_textcoord_flag**[ i ] may be understood as the foregoing second field information, and **asps_vmc_ext_derive_textcoord_method**[ i ] may be understood as the foregoing third field information.

In addition to that a parameter related to the obtaining manner for texture coordinates is specified in the parameter set, a corresponding profile may be further formulated to support different encoding/decoding algorithms and tools. Specifically, it may be specified in a profile that different profiles support different processing manners for texture coordinates. An example of a profile is shown in Table 2. Two profiles are defined. Different encoding parameters are specified for the two profiles to limit corresponding functions.

Table 2:

| | Profile name | |
|---|---|---|
| **Syntactic element** | **Base VDMC** | **Extended VDMC** |
| ptl_profile_toolset_idc | 0 | 1 |
| asps_vmc_ext_derive_textcoord_flag | 0 | 1 |
| **ptl_profile_toolset_idc** is defined in profile_tier_level() in a V3C parameter set, and is used for indicating a decoding tool supported by a bitstream referring to the V3C parameter set. In the foregoing table, the value of 0 represents that for all attributes, asps_vmc_ext_derive_textcoord_flag can only be 0, and the value of 1 represents that asps_vmc_ext_derive_textcoord_flag can be 1. | | |

Optionally, in some embodiments, the encoding framework 1, the encoding framework 2, and the encoding framework 3 may be combined. In this case, in addition to indicating the foregoing obtaining manner, the position information of mesh parameterization may be further indicated. For example, in some embodiments, the target identification information further includes: fourth field information, where the fourth field information is used for indicating position information of the mesh parameterization performed by the decoder side.

In this embodiment of this application, the target identification information is located in the atlas bitstream. The fourth field information may explicitly or implicitly indicate position information of the mesh parameterization performed by the decoder side. That the fourth field information is used for indicating position information of the mesh parameterization performed by the decoder side may alternatively be understood as or replaced with that the fourth field information is used for indicating position information of the mesh parameterization performed by the encoder side. For example, an optional syntax structure may be shown in Table 3.

Table 3:

| asps_vmc_extension( ) { | Descriptor |
|---|---|
| ... | |
| asps_vmc_ext_num_attribute_video | u(7) |
| for(i=0; i< asps_vmc_ext_num_attribute_video; i++){ | |
| ... | |

(continued)

| | |
|---|---|
| **asps_vmc_ext_derive_textcoord_flag**[ i ] | u(1) |
| if(asps_vmc_ext_derive_textcoord_flag) { | |
| **asps_vmc_ext_derive_textcoord_method**[ i ] | u(3) |
| **asps_vmc_ext_derive_tex_from_base_flag**[ i ] | u(1) |
| if(asps_vmc_ext_derive_textcoord_method[ i ]== method index) { | |
| //a parameter list used in a parameterization method corresponding to method index | |
| } | |
| } | |
| } | |

When the value of **asps_vmc_ext_derive_tex_from_base_flag**[ i ] is 1, the decoder side regenerates texture coordinates for an attribute map having an index of i, and performs mesh parameterization according to a reconstructed base mesh. When the value is 0, mesh parameterization is performed according to a reconstructed deformed mesh.

In this embodiment of this application, **asps_vmc_ext_derive_tex_from_base_flag**[ i ] may be understood as the foregoing fourth field information.

Optionally, in some embodiments, the target identification information is further used for indicating position information of the mesh parameterization performed by the decoder side.

In this embodiment of this application, the target identification information may be a profile identifier (ID). To be specific, the target identification information is carried in a header field of the target bitstream. For example, three different profiles may be defined. Each profile specifies a different value of a syntax parameter to limit a function of the decoder side, as shown in Table 4:

Table 4:

| | Profile name | | |
|---|---|---|---|
| **Syntactic element** | **Base VDMC** | **Extended VDMC** | **Advanced VDMC** |
| ptl_profile_toolset_idc | 0 | 1 | 2 |
| asps_vmc_ext_derive_textcoord_flag | 0 | 1 | 1 |
| asps_vmc_ext_derive_tex_from_base_flag | - | 1 | 0 |

In a profile corresponding to an extended VDMC (VDMC Extended), asps_vmc_ext_derive_tex_from_base_flag can only be 1, and a corresponding function is that the profile supports only performing parameterization on a reconstructed base mesh at the decoder side. The function corresponding to advanced VDMC (VDMC High) means that the reconstructed deformed mesh may be parameterized at the decoder side.

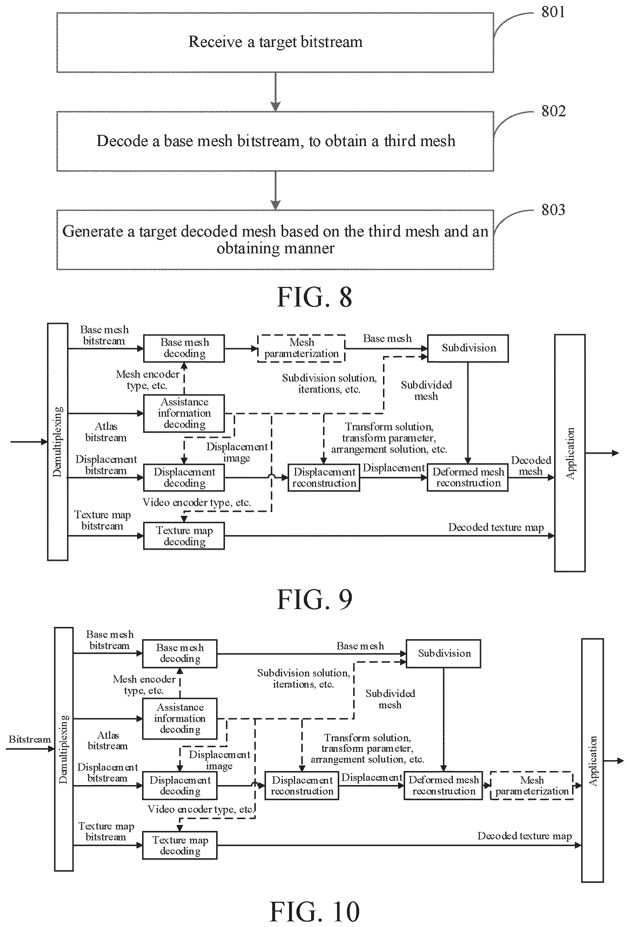

Optionally, an embodiment of this application further provides a decoding processing method. As shown in FIG. 8, the decoding processing method includes:

Step 801: Receive a target bitstream, where the target bitstream includes a base mesh bitstream and target identification information, the target identification information is used for indicating an obtaining manner for target texture coordinates, and the obtaining manner includes obtaining from the base mesh bitstream or generating by the decoder side based on mesh parameterization.

Step 802: Decode the base mesh bitstream, to obtain a third mesh.

Step 803: Generate a target decoded mesh based on the third mesh and the obtaining manner.

The target decoded mesh includes the target texture coordinates.

In this embodiment of this application, the target identification information may explicitly or implicitly indicate the foregoing obtaining manner. Because the obtaining manner is indicated by using the target identification information, the decoder side may use a corresponding obtaining manner to perform mesh coordinate decoding, thereby improving flexibility of mesh decoding.

Optionally, in some embodiments, in a case that the obtaining manner is obtaining texture coordinates from the base mesh bitstream, the third mesh includes the target texture coordinates. The generating a target decoded mesh based on the third mesh and the obtaining manner includes:

> subdividing the third mesh to obtain a third subdivided mesh; and
> performing deformed mesh reconstruction based on the third subdivided mesh and a third vertex displacement, to obtain the target decoded mesh.

The third vertex displacement is obtained based on a displacement bitstream in the target bitstream.

Optionally, in a case that the obtaining manner is generating by the decoder side based on mesh parameterization, the generating a target decoded mesh based on the third mesh and the obtaining manner includes:

> performing mesh parameterization on the third mesh, to obtain a fourth mesh, where the fourth mesh includes the target texture coordinates;
> subdividing the fourth mesh to obtain a first subdivided mesh; and
> performing deformed mesh reconstruction based on the first subdivided mesh and a third vertex displacement, to obtain the target decoded mesh.

The third vertex displacement is obtained based on a displacement bitstream in the target bitstream.

Optionally, the performing mesh parameterization on the third mesh, to obtain a fourth mesh includes: performing mesh parameterization on the third mesh, to obtain a fourth mesh in a case that the target identification information indicates that the decoder side performs the mesh parameterization before performing subdivision processing.

Optionally, in a case that the obtaining manner is generating by the decoder side based on mesh parameterization, the generating a target decoded mesh based on the third mesh and the obtaining manner includes:

> subdividing the third mesh to obtain a second subdivided mesh;
> performing deformed mesh reconstruction based on the second subdivided mesh and a third vertex displacement, to obtain a fourth reconstructed deformed mesh; and
> performing mesh parameterization on the fourth reconstructed deformed mesh, to obtain the target decoded mesh.

The third vertex displacement is obtained based on a displacement bitstream in the target bitstream.

Optionally, the performing mesh parameterization on the fourth reconstructed deformed mesh, to obtain the target decoded mesh includes: performing mesh parameterization on the fourth reconstructed deformed mesh, to obtain the target decoded mesh in a case that the target identification information indicates that the decoder side performs the mesh parameterization after performing deformed mesh reconstruction.

Optionally, the target identification information is located in an atlas bitstream in the target bitstream, and the atlas bitstream is obtained based on assistance information.

Optionally, the target identification information includes at least one of the following:

> first field information, where the first field information is used for indicating the number of the target texture coordinates;
> second field information, where the second field information is used for indicating whether the target texture coordinates are generated by the decoder side based on mesh parameterization; and
> third field information, where the third field information is used for indicating index information of a method for generating the target texture coordinates.

Optionally, the target identification information further includes: fourth field information, where the fourth field information is used for indicating position information of the mesh parameterization performed by the decoder side.

Optionally, the target identification information is information for indicating functions and algorithms to be supported by the decoder side.

Optionally, the target identification information is further used for indicating position information of the mesh parameterization performed by the decoder side.

It should be noted that in this embodiment of this application, decoding frameworks of the decoder side are different for different positions on which the decoder side performs mesh parameterization, for example, may include the decoding frameworks of FIG. 9 and FIG. 10. The following describes a decoding procedure in detail by using FIG. 9 as an example.

> 1. Assistance information Decoding.

The decoder side first determines a decoding solution according to assistance information. The decoding solution mainly includes an identifier of the obtaining manner for texture coordinates, namely, whether the texture coordinates are regenerated at the decoder side, and may further include an optional position at which the texture coordinates are generated. A static mesh encoder type instructs the decoder side to use a corresponding static mesh decoder. A video encoder type instructs the decoder side to use a corresponding video decoder. A subdivision processing solution is a solution of subdivision processing of a base mesh in a reconstructed deformed mesh. The solutions of subdivision processing of the encoder/decoder side should be kept consistent. There are further an optional space domain displacement transform solution, a coefficient arrangement solution, and the like.

2. Base Mesh Decoding: Decoding of a base mesh may be divided into an intra-frame mode and an inter-frame mode. For the intra-frame mode, the module decodes an input base mesh bitstream by using a decoder corresponding to the static mesh encoder indicated by the assistance information, and an output of decoding is a three-dimensional mesh, including geometrical information, a connection relationship, texture coordinate information, and the like. For the inter-frame mode, the module is responsible for decoding a motion vector corresponding to a vertex, and then reconstructing a base mesh of a current frame according to a reference frame.

3. Mesh Parameterization: If the assistance information indicates that texture coordinates are regenerated at the decoder side, the module parameterizes the input mesh according to a corresponding parameter. A parameterization operation is consistent with that at the encoder side. The assistance information may further indicate a position of the module, and indicate whether the module parameterizes the reconstructed base mesh or the reconstructed deformed mesh.

4. Displacement Decoding: In a displacement decoding process, a corresponding video encoder needs to be determined according to an assistance information identifier, and the decoder side invokes a corresponding video decoder to decode a displacement bitstream. For decoded displacement information, a displacement reconstruction module further needs to obtain a displacement vector corresponding to a reconstructed subdivided mesh vertex. Operations of the displacement reconstruction module are mainly to perform, by using a quantization parameter and a transform parameter indicated by the assistance information, inverse quantization, inverse transform, and the like on the decoded displacement information, namely wavelet coefficients. Moreover, for information of video decoding, corresponding displacement information needs to be first extracted from a two-dimensional image according to an arrangement manner of the encoder side.

5. Subdivision Processing: An operation of the subdivision processing is the same as an operation of the subdivision processing of the encoder side. A subdivision processing method, iterations, and the like of the base mesh are indicated by using assistance information.

6. Deformed Mesh Reconstruction: After decoding and reconstruction of the base mesh and the displacement vector are completed, a deformed mesh is reconstructed according to the two parts. A corresponding displacement vector is added to each vertex of the subdivided mesh, as shown in Formula 23:

$$deformedmesh[i].v[k] = subdivmesh[i].v[k] + displacement[k] \qquad (23),$$

where $subdivmesh[i].v[k]$ represents geometrical coordinates of a $k^{th}$ vertex after subdivision processing of a base mesh of a current frame (having an index of $i$), $displacement[k]$ represents a space domain displacement vector corresponding to the $k^{th}$ vertex, and $deformedmesh[i].v[k]$ represents geometrical coordinates of the $k^{th}$ vertex after subdivision processing and deformation processing of the current frame.

7. Displacement Map Decoding: A texture map decoder is responsible for decoding a texture map bitstream, and the texture map bitstream is decoded by using the video decoder indicated in the assistance information. Optional color space conversion is performed to obtain an image format consistent with an input texture map of the encoder side, to obtain a texture map that is finally decoded and output.

After the foregoing procedure is completed, a target decoded mesh that is finally reconstructed by the decoder side and a corresponding attribute map are used as input for corresponding processing.

An executive body of the encoding processing method provided in the foregoing embodiment of this application may be an encoding processing apparatus. An encoding processing apparatus provided in an embodiment of this application is described in an embodiment of this application by using an example in which the encoding processing apparatus performs the encoding processing method.

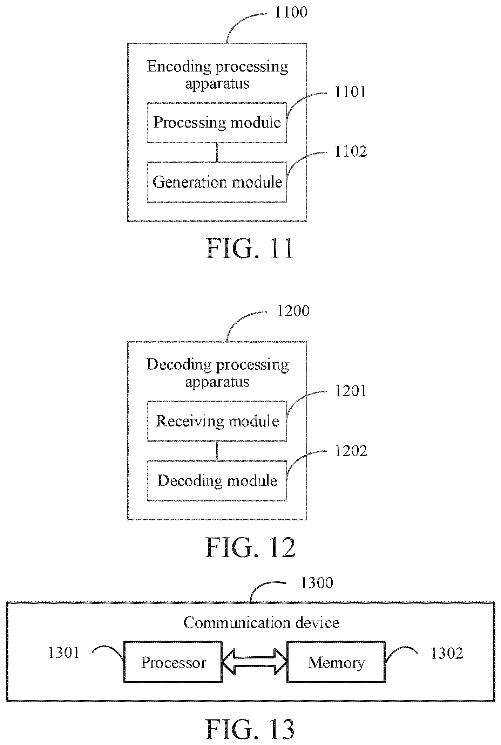

With reference to FIG. 11, an embodiment of this application further provides an encoding processing apparatus. As shown in FIG. 11, the encoding processing apparatus 1100 includes:

a processing module 1101, configured to determine a base mesh bitstream based on a to-be-encoded mesh; and
a generation module 1102, configured to generate a target bitstream based on a to-be-encoded texture map corresponding to the to-be-encoded mesh and the base mesh bitstream, where the target bitstream includes target identification information, the target identification information is used for indicating an obtaining manner for target texture coordinates, and the obtaining manner includes obtaining from the base mesh bitstream or generating by a decoder side based on mesh parameterization.

Optionally, the processing module 1101 is specifically configured to: perform mesh simplification on the to-be-encoded mesh, to obtain a first mesh; perform subdivision processing and deformation processing on the first mesh, to obtain displacement information and a second mesh obtained after adjusting a vertex position of the first mesh; and perform compressed encoding processing on the second mesh, to obtain a base mesh bitstream.

Optionally, the generation module 1102 includes:

a first reconstruction unit, configured to perform mesh reconstruction based on the base mesh bitstream, to obtain a first reconstructed mesh;
a first processing unit, configured to perform mesh parameterization on the first reconstructed mesh, to obtain a second reconstructed mesh; and
a first bitstream mixing unit, configured to mix the base mesh bitstream, a displacement bitstream, an atlas bitstream, and a texture map bitstream, to obtain the target bitstream.

The displacement bitstream is obtained based on displacement information and the second reconstructed mesh, and the displacement information is obtained based on the to-be-encoded mesh. The atlas bitstream is obtained based on assistance information, and the assistance information is used for assisting the decoder side in decoding. The texture map bitstream is obtained based on the first reconstructed mesh, a to-be-encoded texture map, and the displacement bitstream.

Optionally, the generation module 1102 further includes:

a first adjustment unit, configured to adjust a displacement sequence for the second reconstructed mesh according to the displacement information, to obtain a first vertex displacement;
an encoding unit, configured to perform displacement encoding on the first vertex displacement, to obtain a displacement bitstream;
a second reconstruction unit, configured to perform deformed mesh reconstruction based on the first reconstructed mesh and a first reconstructed vertex displacement, to obtain a first reconstructed deformed mesh, where the first reconstructed vertex displacement is obtained based on performing displacement reconstruction on the displacement bitstream; and
a second processing unit, configured to determine the texture map bitstream based on the first reconstructed mesh, a to-be-encoded texture map, and the first reconstructed deformed mesh.

Optionally, the generation module 1102 includes:

a third reconstruction unit, configured to perform mesh reconstruction based on the base mesh bitstream, to obtain a first reconstructed mesh;
a fourth reconstruction unit, configured to perform deformed mesh reconstruction based on the first reconstructed mesh and a second reconstructed vertex displacement, to obtain a second reconstructed deformed mesh, where the second reconstructed vertex displacement is obtained based on performing displacement reconstruction on the displacement bitstream;
a third processing unit, configured to perform mesh parameterization on the second reconstructed deformed mesh, to obtain a third reconstructed deformed mesh; and
a second bitstream mixing unit, configured to mix the base mesh bitstream, the displacement bitstream, an atlas bitstream, and a texture map bitstream, to obtain the target bitstream.

The displacement bitstream is obtained based on displacement information and the first reconstructed mesh, and the displacement information is obtained based on the to-be-encoded mesh. The atlas bitstream is obtained based on assistance information, and the assistance information is used for assisting the decoder side in decoding. The texture map bitstream is obtained based on the first reconstructed mesh, a to-be-encoded texture map, and the third reconstructed deformed mesh.

Optionally, the generation module 1102 further includes a fourth processing unit, configured to: adjust a displacement sequence for the first reconstructed mesh according to the displacement information, to obtain a second vertex displacement; and perform displacement encoding on the second vertex displacement, to obtain a displacement bitstream.

Optionally, the processing module 1101 is further configured to perform mesh parameterization on the first mesh.

An input of the subdivision processing is a mesh-parameterized first mesh.

Optionally, the target identification information is located in an atlas bitstream in the target bitstream, and the atlas bitstream is obtained based on assistance information.

Optionally, the target identification information includes at least one of the following:

first field information, where the first field information is used for indicating the number of the target texture coordinates;

second field information, where the second field information is used for indicating whether the target texture coordinates are generated by the decoder side based on mesh parameterization; and

third field information, where the third field information is used for indicating index information of a method for generating the target texture coordinates.

Optionally, the target identification information further includes: fourth field information, where the fourth field information is used for indicating position information of the mesh parameterization performed by the decoder side.

Optionally, the target identification information is information for indicating functions and algorithms to be supported by the decoder side.

Optionally, the target identification information is further used for indicating position information of the mesh parameterization performed by the decoder side.

An executive body of the decoding processing method provided in the foregoing embodiment of this application may be a decoding processing apparatus. A decoding processing apparatus provided in an embodiment of this application is described in an embodiment of this application by using an example in which the decoding processing apparatus performs the decoding processing method.

With reference to FIG. 12, an embodiment of this application further provides a decoding processing apparatus. As shown in FIG. 12, the decoding processing apparatus 1200 includes:

a receiving module 1201, configured to receive a target bitstream, where the target bitstream includes a base mesh bitstream and target identification information, the target identification information is used for indicating an obtaining manner for target texture coordinates, and the obtaining manner includes obtaining from the base mesh bitstream or generating by a decoder side based on mesh parameterization; and

a decoding module 1202, configured to decode the base mesh bitstream, to obtain a third mesh, and generate a target decoded mesh based on the third mesh and the obtaining manner.

The target decoded mesh includes the target texture coordinates.

Optionally, in a case that the obtaining manner is obtaining texture coordinates from the base mesh bitstream, the third mesh includes the target texture coordinates. The decoding module 1202 is specifically configured to: subdivide the third mesh to obtain a third subdivided mesh; and perform deformed mesh reconstruction based on the third subdivided mesh and a third vertex displacement, to obtain the target decoded mesh, where the third vertex displacement is obtained based on the displacement bitstream.

Optionally, in a case that the obtaining manner is generating by the decoder side based on mesh parameterization, the decoding module 1202 is specifically configured to: perform mesh parameterization on the third mesh, to obtain a fourth mesh, where the fourth mesh includes the target texture coordinates; subdivide the fourth mesh to obtain a first subdivided mesh; and perform deformed mesh reconstruction based on the first subdivided mesh and a third vertex displacement, to obtain the target decoded mesh, where the third vertex displacement is obtained based on the displacement bitstream.

Optionally, the decoding module 1202 is specifically configured to perform mesh parameterization on the third mesh, to obtain a fourth mesh in a case that the target identification information indicates that the decoder side performs the mesh parameterization before performing subdivision processing.

Optionally, in a case that the obtaining manner is generating by the decoder side based on mesh parameterization, the decoding module 1202 is specifically configured to: subdivide the third mesh to obtain a second subdivided mesh; perform deformed mesh reconstruction based on the second subdivided mesh and a third vertex displacement, to obtain a fourth reconstructed deformed mesh; and perform mesh parameterization on the fourth reconstructed deformed mesh, to obtain the target decoded mesh, where the third vertex displacement is obtained based on the displacement bitstream.

Optionally, the decoding module 1202 is specifically configured to perform mesh parameterization on the fourth reconstructed deformed mesh, to obtain the target decoded mesh in a case that the target identification information indicates that the decoder side performs the mesh parameterization after performing deformed mesh reconstruction.

Optionally, the target identification information is located in an atlas bitstream in the target bitstream, and the atlas bitstream is obtained based on assistance information.

Optionally, the target identification information includes at least one of the following:

first field information, where the first field information is used for indicating the number of the target texture coordinates;

second field information, where the second field information is used for indicating whether the target texture coordinates are generated by the decoder side based on mesh parameterization; and

third field information, where the third field information is used for indicating index information of a method for generating the target texture coordinates.

Optionally, the target identification information further includes: fourth field information, where the fourth field information is used for indicating position information of the mesh parameterization performed by the decoder side.

Optionally, the target identification information is information for indicating functions and algorithms to be supported by the decoder side.

Optionally, the target identification information is further used for indicating position information of the mesh parameterization performed by the decoder side.

The encoding processing apparatus and the decoding processing apparatus provided in the embodiments of this application can implement processes implemented in the method embodiments of FIG. 3 to FIG. 10, and the same technical effect can be achieved. To avoid repetition, details are not described herein again.

Optionally, as shown in FIG. 13, an embodiment of this application further provides a communication device 1300, including a processor 1301 and a memory 1302. The memory 1302 has a program or an instruction executable on the processor 1301 therein. For example, when the communication device 1300 is an encoder side device, the program or the instruction, when executed by the processor 1301, implements the steps of the foregoing encoding processing method embodiment, and the same technical effect can be achieved. If the communication device 1300 is a decoder side device, the program or the instruction, when executed by the processor 1301, implements the steps of the foregoing encoding processing method embodiment, and the same technical effect can be achieved. To avoid repetition, details are not described herein again.

An embodiment of this application further provides an electronic device, including a processor and a communication interface.

When the electronic device is an encoder side, the processor is configured to: determine a base mesh bitstream based on a to-be-encoded mesh; and generate a target bitstream based on a to-be-encoded texture map corresponding to the to-be-encoded mesh and the base mesh bitstream. The target bitstream includes target identification information. The target identification information is used for indicating an obtaining manner for target texture coordinates. The obtaining manner includes obtaining from the base mesh bitstream or generating by a decoder side based on mesh parameterization.

When the electronic device is a decoder side, the communication interface is configured to: receive a target bitstream, where the target bitstream includes a base mesh bitstream and target identification information, the target identification information is used for indicating an obtaining manner for target texture coordinates, and the obtaining manner includes obtaining from the base mesh bitstream or generating by the decoder side based on mesh parameterization. The processor is configured to: decode the base mesh bitstream, to obtain a third mesh; and generate a target decoded mesh based on the third mesh and the obtaining manner, where the target decoded mesh includes the target texture coordinates.

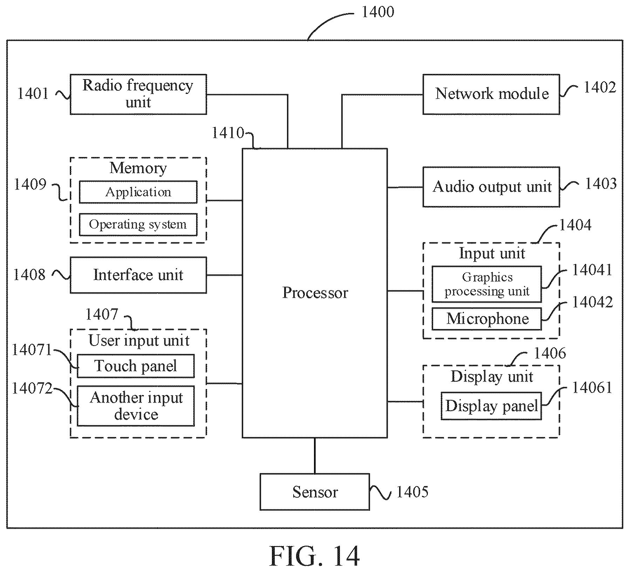

The electronic device embodiment corresponds to the foregoing method embodiments applied to encoder and decoder side devices. The implementation processes and implementations of the foregoing method embodiments may all be applied to the electronic device embodiment, and the same technical effect can be achieved. Specifically, FIG. 14 is a schematic diagram of a hardware structure of an electronic device implementing an embodiment of this application.

The electronic device 1400 includes, but is not limited to, at least some components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the electronic device 1400 may further include a power supply (e.g., a battery) for supplying power to the components. The power supply may be logically connected to the processor 1410 by using a power management system, thereby implementing functions such as charging, discharging, and power consumption management by using the power management system. The structure of the electronic device shown in FIG. 14 constitutes no limitation on the electronic device. The electronic device may include more or fewer components than those shown in the figure, or some components may be combined, or a different component deployment may be used. Details are not described herein.

It should be understood that, in this embodiment of this application, the input unit 1404 may include a graphics processing unit (Graphics Processing Unit, GPU) 14041 and a microphone 14042. The graphics processing unit 14041 performs processing on image data of a static picture or a video that is obtained by an image acquisition apparatus (e.g., a camera) in a video acquisition mode or an image acquisition mode. The display unit 1406 may include a display panel 14061. The display panel 14061 may be configured by using a liquid crystal display, an organic light-emitting diode, or the like. The user input unit 1407 includes at least one of a touch panel 14071 and another input device 14072. The touch panel 14071 is also referred to as a touchscreen. The touch panel 14071 may include two parts: a touch detection apparatus and a touch controller. The another input device 14072 may include, but is not limited to, a physical keyboard, a functional key (e.g., a volume control key or a switch key), a track ball, a mouse, and a joystick. Details are not described herein again.

In this embodiment of this application, the radio frequency unit 1401 receives downlink data from a network side device and may then transmit the data to the processor 1410 for processing. In addition, the radio frequency unit 1401 may send uplink data to the network side device. Generally, the radio frequency unit 1401 includes, but is not limited to, an antenna, an amplifier, a transceiver, a coupler, a low noise amplifier, a duplexer, and the like.

The memory 1409 may be configured to store a software program or instruction and various data. The memory 1409 may mainly include a first storage region storing the program or instruction and a second storage region storing the data. The first storage region may store an operating system, an application or instruction required by at least one function (e.g., a sound playback function and an image display function), and the like. Besides, the memory 1409 may include a volatile memory or a non-volatile memory. Alternatively, the memory 1409 may include both the volatile memory and the non-volatile memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1409 in this embodiment of this application includes, but is not limited to, these memories and any other memory of a suitable type.

The processor 1410 may include one or more processing units. Optionally, the processor 1410 integrates an application processor and a modem processor. The application processor mainly processes operations related to an operating system, a user interface, an application, and the like. The modem processor mainly processes wireless communication signals, and is, for example, a baseband processor. It may be understood that the foregoing modem may not be integrated into the processor 1410.

When the electronic device is an encoder side, the processor 1410 is configured to determine a base mesh bitstream based on a to-be-encoded mesh, and generate a target bitstream based on a to-be-encoded texture map corresponding to the to-be-encoded mesh and the base mesh bitstream. The target bitstream includes target identification information. The target identification information is used for indicating an obtaining manner for target texture coordinates. The obtaining manner includes obtaining from the base mesh bitstream or generating by a decoder side based on mesh parameterization.

When the electronic device is a decoder side, the radio frequency unit 1401 is configured to: receive a target bitstream, where the target bitstream includes a base mesh bitstream and target identification information, the target identification information is used for indicating an obtaining manner for target texture coordinates, and the obtaining manner includes obtaining from the base mesh bitstream or generating by the decoder side based on mesh parameterization. The processor 1410 is configured to: decode the base mesh bitstream, to obtain a third mesh; and generate a target decoded mesh based on the third mesh and the obtaining manner, where the target decoded mesh includes the target texture coordinates.

An embodiment of this application further provides a readable storage medium. The readable storage medium has a program or an instruction stored therein. The program or the instruction, when executed by a processor, implements various processes of the embodiments of the foregoing encoding processing method or decoding processing method, and the same technical effects can be achieved. To avoid repetition, details are not described herein again.

The processor is the processor in the electronic device described in the foregoing embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to execute a program or an instruction, to implement various processes of the embodiments of the foregoing encoding processing method or decoding processing method, and the same technical effects can be achieved. To avoid repetition, details are not described herein again.

It should be understood that the chip mentioned in this embodiment of this application may alternatively be referred to as a system level chip, a system chip, a chip system, a system on chip, or the like.

An embodiment of this application further provides a computer program/program product. The computer program/program product is stored in a storage medium. The computer program/program product is executed by at least one processor to implement various processes of the embodiments of the foregoing encoding processing method or decoding processing method, and the same technical effects can be achieved. To avoid repetition, details are not described herein again.

An embodiment of this application further provides a video encoding and decoding system, including: an encoder side device and a decoder side device. The encoder side device is configured to perform all processes in FIG. 3 and all method embodiments of the foregoing encoder side device. The decoder side device is configured to perform all processes in FIG. 8 and all method embodiments of the foregoing decoder side device, and the same technical effect can be achieved. To avoid repetition, details are not described herein again.

It should be noted that in this specification, the term "include", "comprise", or any other variants thereof are intended to encompass in a non-exclusive manner, so that a process, method, object, or apparatus including a series of elements not only includes those elements, but also includes other elements that are not explicitly listed, or elements that are inherent to such a process, method, object, or apparatus. Without more limitations, an element defined by a sentence "including a ..." does not exclude a case that there are still other same elements in the process, method, object, or apparatus including the element. In addition, it should be noted that the scope of the method and the apparatus in implementations of this application is not limited to function execution in the order shown or discussed, and may further include function execution in a substantially simultaneous manner or in the opposite order based on the functions. For example, the described method may be performed in different order from the described order, and various steps may further be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of this application, in essence, or a part contributing to the related art may be embodied in a form of a computer software product. The computer software product is stored in a storage medium (e.g., a ROM/RAM, a magnetic disk, or an optical disk), including a plurality of instructions for causing a terminal (which may be a mobile phone, a computer, a server, an air conditioner, a network device, or the like) to perform the method in the embodiments of this application.

The embodiments of this application are described above with reference to the accompanying drawings. However, this application is not limited to the foregoing specific implementations, and the foregoing specific implementations are only exemplary and not limitative. A person of ordinary skill in the art may make various variations under the teaching of this application without departing from the spirit of this application and the protection scope of the claims, and such variations shall all fall within the protection scope of this application.

## Claims

1. An encoding processing method, applied to an encoder side, the method comprising:

   determining a base mesh bitstream based on a to-be-encoded mesh; and
   generating a target bitstream based on a to-be-encoded texture map corresponding to the to-be-encoded mesh and the base mesh bitstream, wherein the target bitstream comprises target identification information, the target identification information is used for indicating an obtaining manner for target texture coordinates, and the obtaining manner comprises obtaining from the base mesh bitstream or generating by a decoder side based on mesh parameterization.

2. The method according to claim 1, wherein the determining a base mesh bitstream based on a to-be-encoded mesh comprises:

   performing mesh simplification on the to-be-encoded mesh, to obtain a first mesh;
   performing subdivision processing and deformation processing on the first mesh, to obtain displacement information and a second mesh obtained after adjusting a vertex position of the first mesh; and
   performing compressed encoding processing on the second mesh, to obtain a base mesh bitstream.

3. The method according to claim 1 or 2, wherein the generating a target bitstream based on a to-be-encoded texture map corresponding to the to-be-encoded mesh and the base mesh bitstream comprises:

   performing mesh reconstruction based on the base mesh bitstream, to obtain a first reconstructed mesh;
   performing mesh parameterization on the first reconstructed mesh, to obtain a second reconstructed mesh; and
   mixing the base mesh bitstream, a displacement bitstream, an atlas bitstream, and a texture map bitstream, to obtain the target bitstream,
   wherein the displacement bitstream is obtained based on displacement information and the second reconstructed mesh, the displacement information is obtained based on the to-be-encoded mesh, the atlas bitstream is obtained based on assistance information, the assistance information is used for assisting the decoder side in decoding, and the texture map bitstream is obtained based on the first reconstructed mesh, a to-be-encoded texture map, and the displacement bitstream.

4. The method according to claim 1 or 2, wherein the generating a target bitstream based on a to-be-encoded texture map corresponding to the to-be-encoded mesh and the base mesh bitstream comprises:

performing mesh reconstruction based on the base mesh bitstream, to obtain a first reconstructed mesh;
performing deformed mesh reconstruction based on the first reconstructed mesh and a second reconstructed vertex displacement, to obtain a second reconstructed deformed mesh, wherein the second reconstructed vertex displacement is obtained based on performing displacement reconstruction on the displacement bitstream;
performing mesh parameterization on the second reconstructed deformed mesh, to obtain a third reconstructed deformed mesh; and
mixing the base mesh bitstream, the displacement bitstream, an atlas bitstream, and a texture map bitstream, to obtain the target bitstream,
wherein the displacement bitstream is obtained based on displacement information and the first reconstructed mesh, the displacement information is obtained based on the to-be-encoded mesh, the atlas bitstream is obtained based on assistance information, the assistance information is used for assisting the decoder side in decoding, and the texture map bitstream is obtained based on the first reconstructed mesh, a to-be-encoded texture map, and the third reconstructed deformed mesh.

5. The method according to any one of claims 1 to 4, wherein the target identification information is located in an atlas bitstream in the target bitstream, and the atlas bitstream is obtained based on assistance information.

6. The method according to claim 5, wherein the target identification information comprises at least one of the following:

first field information, wherein the first field information is used for indicating the number of the target texture coordinates;
second field information, wherein the second field information is used for indicating whether the target texture coordinates are generated by the decoder side based on mesh parameterization; and
third field information, wherein the third field information is used for indicating index information of a method for generating the target texture coordinates.

7. The method according to claim 6, wherein the target identification information further comprises: fourth field information, wherein the fourth field information is used for indicating position information of the mesh parameterization performed by the decoder side.

8. The method according to any one of claims 1 to 4, wherein the target identification information is information for indicating functions and algorithms to be supported by the decoder side.

9. The method according to any one of claims 1 to 5 and 8, wherein the target identification information is further used for indicating position information of the mesh parameterization performed by the decoder side.

10. A decoding processing method, applied to a decoder side, the method comprising:

receiving a target bitstream, wherein the target bitstream comprises a base mesh bitstream and target identification information, the target identification information is used for indicating an obtaining manner for target texture coordinates, and the obtaining manner comprises obtaining from the base mesh bitstream or generating by the decoder side based on mesh parameterization;
decoding the base mesh bitstream, to obtain a third mesh; and
generating a target decoded mesh based on the third mesh and the obtaining manner,
wherein the target decoded mesh comprises the target texture coordinates.

11. The method according to claim 10, wherein in a case that the obtaining manner is generating by the decoder side based on mesh parameterization, the generating a target decoded mesh based on the third mesh and the obtaining manner comprises:

performing mesh parameterization on the third mesh, to obtain a fourth mesh, wherein the fourth mesh comprises the target texture coordinates;

subdividing the fourth mesh to obtain a first subdivided mesh; and

performing deformed mesh reconstruction based on the first subdivided mesh and a third vertex displacement, to obtain the target decoded mesh,

wherein the third vertex displacement is obtained based on a displacement bitstream in the target bitstream.

12. The method according to claim 11, wherein the performing mesh parameterization on the third mesh, to obtain a fourth mesh comprises:

performing mesh parameterization on the third mesh, to obtain a fourth mesh in a case that the target identification information indicates that the decoder side performs the mesh parameterization before performing subdivision processing.

13. The method according to claim 10, wherein in a case that the obtaining manner is generating by the decoder side based on mesh parameterization, the generating a target decoded mesh based on the third mesh and the obtaining manner comprises:

subdividing the third mesh to obtain a second subdivided mesh;

performing deformed mesh reconstruction based on the second subdivided mesh and a third vertex displacement, to obtain a fourth reconstructed deformed mesh; and

performing mesh parameterization on the fourth reconstructed deformed mesh, to obtain the target decoded mesh,

wherein the third vertex displacement is obtained based on a displacement bitstream in the target bitstream.

14. The method according to claim 13, wherein the performing mesh parameterization on the fourth reconstructed deformed mesh, to obtain the target decoded mesh comprises:

performing mesh parameterization on the fourth reconstructed deformed mesh, to obtain the target decoded mesh in a case that the target identification information indicates that the decoder side performs the mesh parameterization after performing deformed mesh reconstruction.

15. The method according to any one of claims 10 to 14, wherein the target identification information is located in an atlas bitstream in the target bitstream, and the atlas bitstream is obtained based on assistance information.

16. The method according to claim 15, wherein the target identification information comprises at least one of the following:

first field information, wherein the first field information is used for indicating the number of the target texture coordinates;

second field information, wherein the second field information is used for indicating whether the target texture coordinates are generated by the decoder side based on mesh parameterization; and

third field information, wherein the third field information is used for indicating index information of a method for generating the target texture coordinates.

17. The method according to claim 16, wherein the target identification information further comprises: fourth field information, wherein the fourth field information is used for indicating position information of the mesh parameterization performed by the decoder side.

18. The method according to any one of claims 10 to 14, wherein the target identification information is information for indicating functions and algorithms to be supported by the decoder side.

19. The method according to any one of claims 10 to 15 and 18, wherein the target identification information is further used for indicating position information of the mesh parameterization performed by the decoder side.

20. An encoding processing apparatus, applied to an encoder side, the apparatus comprising:

a processing module, configured to determine a base mesh bitstream based on a to-be-encoded mesh; and

a generation module, configured to generate a target bitstream based on a to-be-encoded texture map corresponding to the to-be-encoded mesh and the base mesh bitstream, wherein the target bitstream comprises target identification information, the target identification information is used for indicating an obtaining manner for target texture coordinates, and the obtaining manner comprises obtaining from the base mesh bitstream or generating by a decoder side based on mesh parameterization.

21. A decoding processing apparatus, applied to a decoder side, the apparatus comprising:

a receiving module, configured to receive a target bitstream, wherein the target bitstream comprises a base mesh bitstream and target identification information, the target identification information is used for indicating an obtaining manner for target texture coordinates, and the obtaining manner comprises obtaining from the base mesh bitstream or generating by the decoder side based on mesh parameterization; and
a decoding module, configured to decode the base mesh bitstream, to obtain a third mesh, and generate a target decoded mesh based on the third mesh and the obtaining manner,
wherein the target decoded mesh comprises the target texture coordinates.

22. An electronic device, comprising a processor and a memory, wherein the memory stores a program or an instruction executable on the processor, the program or the instruction, when executed by the processor, implements the steps of the encoding processing method according to any one of claims 1 to 9, or the program or the instruction, when executed by the processor, implements the steps of the decoding processing method according to any one of claims 10 to 19.

23. A readable storage medium, having a program or an instruction stored therein, wherein the program or the instruction, when executed by a processor, implements the steps of the encoding processing method according to any one of claims 1 to 9, or the program or the instruction, when executed by the processor, implements the steps of the decoding processing method according to any one of claims 10 to 19.

FIG. 1

FIG. 2

Determine a base mesh bitstream based on a to-be-encoded mesh — 301

Generate a target bitstream based on a to-be-encoded texture map corresponding to the to-be-encoded mesh and the base mesh bitstream — 302

FIG. 3

FIG. 4

FIG. 5

FIG. 6

FIG. 7

```
┌────────────────────────────────────────────────────────┐      801
│                                                        │ ╱
│              Receive a target bitstream                │
│                                                        │
└────────────────────────────────────────────────────────┘
                           │
                           ▼
┌────────────────────────────────────────────────────────┐      802
│                                                        │ ╱
│        Decode a base mesh bitstream, to obtain a third mesh│
│                                                        │
└────────────────────────────────────────────────────────┘
                           │
                           ▼
┌────────────────────────────────────────────────────────┐      803
│   Generate a target decoded mesh based on the third mesh and an│ ╱
│                    obtaining manner                    │
└────────────────────────────────────────────────────────┘
```

## FIG. 8

## FIG. 9

## FIG. 10

— 1100

Encoding processing
apparatus

— 1101

Processing module

— 1102

Generation module

FIG. 11

— 1200

Decoding processing
apparatus

— 1201

Receiving module

— 1202

Decoding module

FIG. 12

— 1300

Communication device

1301 — Processor ⇔ Memory — 1302

FIG. 13

1400

Radio frequency unit — 1401

Network module — 1402

Memory — 1409
Application
Operating system

1410 — Processor

Audio output unit — 1403

Input unit — 1404
Graphics processing unit — 14041
Microphone — 14042

Interface unit — 1408

User input unit — 1407
Touch panel — 14071
Another input device — 14072

Display unit — 1406
Display panel — 14061

Sensor — 1405

FIG. 14

## INTERNATIONAL SEARCH REPORT

| International application No. |
|---|
| **PCT/CN2024/080892** |

| A. | CLASSIFICATION OF SUBJECT MATTER |
|---|---|

H04N19/20(2014.01)i; G06T9/00(2006.01)i

According to International Patent Classification (IPC) or to both national classification and IPC

| B. | FIELDS SEARCHED |
|---|---|

Minimum documentation searched (classification system followed by classification symbols)

IPC:H04N,G06T

Documentation searched other than minimum documentation to the extent that such documents are included in the fields searched

Electronic data base consulted during the international search (name of data base and, where practicable, search terms used)

CNABS, CNTXT, WPABSC, VEN, DWPI, ENTXT, ENTXTC, CNKI, IEEE: 编码, 解码, 点云, 动态网格, 网格, 三维, 标记, 标识, 标志, 语法, 指示, 码流, 属性, 纹理, 坐标, code, encode, decode, point cloud, VDMC, V3C, mesh, three-dimensional, 3D, identification, flag, syntax, indicate, stream, attribute, texture, coordinate

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2018253867 A1 (CANON K.K.) 06 September 2018 (2018-09-06) description, paragraphs 70-306 | 1, 2, 8, 10-12, 18, 20-23 |
| Y | US 2018253867 A1 (CANON K.K.) 06 September 2018 (2018-09-06) description, paragraphs 70-306 | 3-5, 13-15 |
| Y | US 2021090301 A1 (APPLE INC.) 25 March 2021 (2021-03-25) description, paragraphs 85-515 | 3-5, 13-15 |
| A | JP 2005332028 A (NIPPON TELEGRAPH AND TELEPHONE CORP.) 02 December 2005 (2005-12-02) entire document | 1-23 |
| A | WO 2022116165 A1 (SZ DJI TECHNOLOGY CO., LTD.) 09 June 2022 (2022-06-09) entire document | 1-23 |
| A | CN 112470469 A (SZ DJI TECHNOLOGY CO., LTD.) 09 March 2021 (2021-03-09) entire document | 1-23 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 June 2024** | **04 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080892**

| Patent document cited in search report | | | Publication date (day/month/year) | Patent family member(s) | | | Publication date (day/month/year) |
|---|---|---|---|---|---|---|---|
| US | 2018253867 | A1 | 06 September 2018 | GB | 201703556 | D0 | 19 April 2017 |
| | | | | GB | 2560319 | A | 12 September 2018 |
| | | | | GB | 2560319 | B | 02 September 2020 |
| | | | | US | 10552987 | B2 | 04 February 2020 |
| US | 2021090301 | A1 | 25 March 2021 | US | 11450030 | B2 | 20 September 2022 |
| | | | | US | 2023030913 | A1 | 02 February 2023 |
| | | | | US | 11783508 | B2 | 10 October 2023 |
| | | | | US | 2023401751 | A1 | 14 December 2023 |
| | | | | WO | 2021062044 | A1 | 01 April 2021 |
| JP | 2005332028 | A | 02 December 2005 | JP | 4398785 | B2 | 13 January 2010 |
| WO | 2022116165 | A1 | 09 June 2022 | None | | | |
| CN | 112470469 | A | 09 March 2021 | None | | | |

Form PCT/ISA/210 (patent family annex) (July 2022)

**EP 4 683 323 A1**

**Patent documents cited in the description**

- CN 202310262481